# EUROPEAN PATENT SPECIFICATION

(11) **EP 4 276 492 B1**
(45) Date of publication and mention of the grant of the patent: **25.06.2025**
(21) Application number: 21917705.2
(22) Date of filing: 23.12.2021
(51) Int. Cl.: G01S 7/539, G01N 29/07, G01N 29/48, G01N 29/11, G01S 15/931, G01S 7/527

(54) **OBJECT DETECTION DEVICE**
OBJEKTERKENNUNGSVORRICHTUNG
DISPOSITIF DE DÉTECTION D'OBJET

(30) Priority: 08.01.2021 JP 2021002369
(43) Date of publication of application: 15.11.2023
(73) Proprietor: AISIN CORPORATION, Kariya-shi, Aichi 448-8650 (JP)
(72) Inventor: SUGAE, Ippei, Kariya-shi, Aichi 448-8650 (JP); INABA, Hisashi, Kariya-shi, Aichi 448-8650 (JP)
(74) Representative: TBK
(86) International application number: PCT/JP2021/047986
(87) International publication number: WO 2022/149485

(56) References cited:
- EP-A1- 3 382 419
- WO-A1-2015/162812
- JP-A- 2021 001 811
- US-A1- 2019 302 258

## Description

### TECHNICAL FIELD

The present disclosure relates to an object detection device.

### BACKGROUND ART

Conventionally, there are techniques for detecting information on an object based on transmission and reception of an ultrasonic wave or the like. Also, in this technique, Constant False Alarm Rate (CFAR) processing is known as processing for reducing noise called clutter caused by reflection from an object that is not a detection target.

According to the CFAR processing, it is possible to acquire a CFAR signal corresponding to a signal acquired by removing clutter from the processing target signal by using a moving average of a value (signal level) of the processing target signal based on the receiving wave. Further, the object can be detected by comparing the CFAR signal with a threshold.

### Related Art Documents

### Patent Documents

Patent Document 1: Japanese Patent Application Publication No. 2006-292597 (JP 2006-292597 A)
Further related art comprises the following patent literature:
JP 2021 001811 A, US 2019/302258 A1, WO 2015/162812 A1 and EP 3 382 419 A1

### SUMMARY OF THE INVENTION

### Problem to be Solved by the Invention

However, in the related art described above, a road surface type cannot be estimated in the CFAR processing when the transmitting wave is transmitted toward the road surface. When the road surface type can be estimated, the accuracy of a setting threshold value and the object detection can be improved, which is significant.

Therefore, one object of the present disclosure is to provide an object detection device capable of estimating a road surface type by CFAR processing.

### Means for Solving the Problem

Aspects in order to achieve such an object are set out in the independent claims. Further developments are indicated by the dependent claims 3 to 6.

With such a configuration, in the CFAR processing, the road surface type can be estimated based on the average signal level and the variation degree of the plurality of CFAR signals.

Also, in the above-described object detection device, a plurality of the transmitting units is provided, and each of the plurality of transmitting units simultaneously transmits the transmitting wave toward the road surface.

With such a configuration, by simultaneously transmitting the transmitting waves from the plurality of transmitting units toward the road surface, the road surface type can be estimated with high accuracy even when the vehicle is traveling.

Further, the object detection device described above further includes a threshold processing unit that sets a threshold regarding the CFAR signal in accordance with the road surface type estimated by the estimating unit.

With such a configuration, the threshold regarding the CFAR signal can be set with high accuracy in accordance with the estimated road surface type.

Further, in the above-described object detection device, the object detection device is installed on a vehicle, and the estimating unit transmits information on the estimated road surface type to a brake control unit of the vehicle.

With such a configuration, accurate brake control can be realized in accordance with the estimated road surface type.

Further, in the object detection device described above, the threshold processing unit sets the threshold to be larger as the variation degree corresponding to the road surface type becomes larger.

With such a configuration, a specifically appropriate threshold can be set for each road surface type.

In the object detection device described above, the estimating unit applies the average value and the variation degree of each of the second processing target signals to a map in which a region is defined in advance by a measured value of the average signal level and the variation degree for each road surface type, and estimates a corresponding road surface type.

With such a configuration, the road surface type can be estimated with high accuracy by using the above-described map created in advance.

### BRIEF DESCRIPTION OF THE DRAWINGS

[FIG. 1] FIG. 1 is an exemplary and schematic view showing an appearance of a vehicle provided with an object detection system according to a first embodiment, in which the vehicle is viewed from above.
[FIG. 2] FIG. 2 is an exemplary and schematic block diagram showing a hardware configuration of the object detection system according to the first embodiment.
[FIG. 3] FIG. 3 is an exemplary and schematic diagram for describing an outline of a technique used for detecting a distance to an object according to the first embodiment.
[FIG. 4] FIG. 4 is an exemplary and schematic block diagram showing a function of an object detection device according to the first embodiment.
[FIG. 5] FIG. 5 is an exemplary and schematic diagram showing a relationship between an amplitude of a CFAR signal and a distance in the first embodiment.
[FIG. 6] FIG. 6 is an exemplary and schematic diagram showing an example of table information storing information of a variation for each road surface type and an average signal level in the first embodiment.
[FIG. 7] FIG. 7 is an exemplary and schematic flowchart showing a series of processes executed by the object detection system according to the first embodiment.
[FIG. 8] FIG. 8 is a diagram schematically showing an example of a first map used by the object detection system according to the second embodiment to estimate the road surface type ahead.
[FIG. 9] FIG. 9 is a diagram schematically showing an example of a second map used by the object detection system according to the second embodiment to estimate the road surface type directly below.

### MODES FOR CARRYING OUT THE INVENTION

Hereinafter, embodiments and modifications of the present disclosure will be described based on the drawings. The configurations of the embodiments and modifications described below, as well as the actions and effects brought about by the configurations, are merely examples, and are not limited to the following description.

### <First Embodiment>

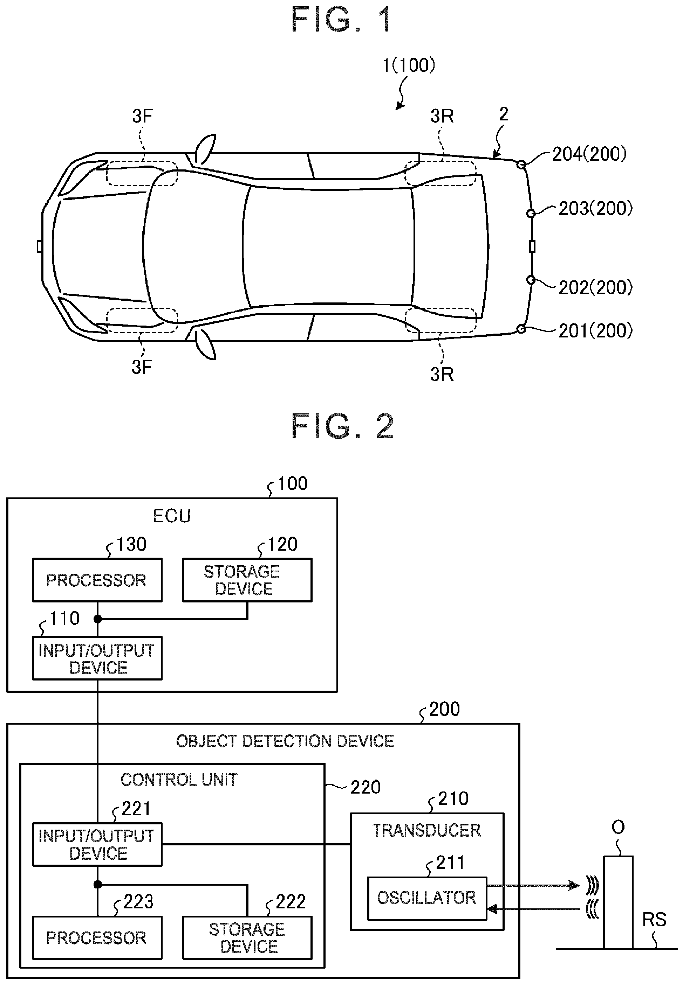

FIG. 1 is an exemplary and schematic view showing an appearance of a vehicle 1 provided with an object detection system according to a first embodiment, in which the vehicle is viewed from above.

As described below, the object detection system according to the first embodiment is an in-vehicle sensor system that performs transmission and reception of sound waves (ultrasonic waves) and acquires a time difference between the transmission and reception so as to detect an object including a human existing in the surroundings (for example, an obstacle O shown in FIG. 2, described below).

More specifically, as shown in FIG. 1, the object detection system according to the first embodiment includes an electronic control unit (ECU) 100 serving as an in-vehicle control device, and object detection devices 201 to 204 serving as in-vehicle sonars. The ECU 100 is mounted inside the four-wheeled vehicle 1 including a pair of front wheels 3F and a pair of rear wheels 3R, and the object detection devices 201 to 204 are installed on an exterior of the vehicle 1.

In the example shown in FIG. 1, as an example, the object detection devices 201 to 204 are installed at different positions in a rear end portion (rear bumper) of a vehicle body 2 serving as the exterior of the vehicle 1. However, the installing positions of the object detection devices 201 to 204 are not limited to the example shown in FIG. 1. For example, the object detection devices 201 to 204 may be installed at a front end portion (front bumper) of the vehicle body 2, may be installed at a side portion of the vehicle body 2, or may be installed at two or more of a rear end portion, the front end portion, and the side portion.

Note that in the first embodiment, the hardware configurations and functions of the object detection devices 201 to 204 are the same. Therefore, hereinafter, the object detection devices 201 to 204 may be collectively referred to as the object detection device 200 to simplify the description. Also, in the first embodiment, the number of object detection devices 200 is not limited to four as shown in FIG. 1.

FIG. 2 is an exemplary and schematic block diagram showing a hardware configuration of the object detection system according to the first embodiment.

As shown in FIG. 2, the ECU 100 has a hardware configuration similar to that of a normal computer. More specifically, the ECU 100 includes an input/output device 110, a storage device 120, and a processor 130.

The input/output device 110 is an interface for realizing transmission and reception of information between the ECU 100 and the outside. For example, in the example shown in FIG. 2, a communication partner of the ECU 100 is the object detection device 200.

The storage device 120 includes main storage devices such as a read only memory (ROM) and a random access memory (RAM), and/or auxiliary storage devices such as a hard disk drive (HDD) and a solid state drive (SSD).

The processor 130 is in charge of various processes executed in the ECU 100. The processor 130 includes an arithmetic device such as a central processing unit (CPU). The processor 130 reads and executes computer programs stored in the storage device 120 to implement various functions such as autonomous parking.

Further, as shown in FIG. 2, the object detection device 200 includes a transducer 210 and a control unit 220.

The transducer 210 has an oscillator 211 configured by a piezoelectric element or the like, and transmits/receives an ultrasonic wave using the oscillator 211.

More specifically, the transducer 210 transmits, as a transmitting wave, an ultrasonic wave generated in response to vibration of the oscillator 211, and receives, as a receiving wave, the vibration of the oscillator 211 caused by the ultrasonic wave transmitted as the transmitting wave that has returned by being reflected by an object present outside. In the example shown in FIG. 2, the obstacle O placed on a road surface RS is illustrated as an object that reflects an ultrasonic wave from the transducer 210.

The example shown in FIG. 2 illustrates a configuration in which both transmission of the transmitting wave and reception of the receiving wave are realized by the single transducer 210 having the single oscillator 211. However, the technique of the first embodiment is also applicable to a configuration in which the configuration on the transmitting side and the configuration on the receiving side are separated such as a configuration in which a first oscillator for transmitting transmitting waves and a second oscillator for receiving receiving waves are provided separately, for example.

The control unit 220 has a hardware configuration similar to that of a normal computer. More specifically, the control unit 220 includes an input/output device 221, a storage device 222, and a processor 223.

The input/output device 221 is an interface that realizes transmission and reception of information between the control unit 220 and the outside (the ECU 100 and the transducer 210 in the example shown in FIG. 1).

The storage device 222 includes main storage devices such as a ROM and a RAM, and/or auxiliary storage devices such as an HDD and an SSD.

The processor 223 is in charge of various processes executed by the control unit 220. The processor 223 includes an arithmetic device such as a CPU, for example. The processor 223 implements various functions by reading and executing computer programs stored in the storage device 333.

Here, the object detection device 200 according to the first embodiment detects a distance to the object by a technique called the time of flight (TOF) method. As will be detailed below, the TOF method is a technique that calculates a distance to an object by taking into consideration a difference between the timing at which a transmitting wave was transmitted (more specifically, the timing at which the transmitting wave began to be transmitted) and the timing at which the receiving wave was received (more specifically, the timing at which the receiving wave began to be received).

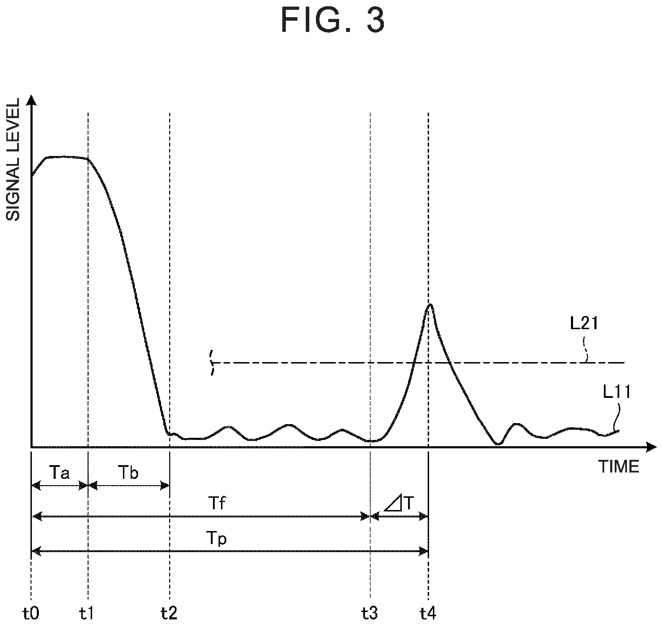

FIG. 3 is an exemplary and schematic diagram for describing an outline of a technique used for the object detection device 200 according to the first embodiment to detect a distance to an object.

More specifically, FIG. 3 is an exemplary and schematic diagram showing, in a graph format, time changes in a signal level (for example, an amplitude) of the ultrasonic wave transmitted and received by the object detection device 200 according to the first embodiment. In the graph shown in FIG. 3, a horizontal axis corresponds to time, and a vertical axis corresponds to the signal level of the signal transmitted and received by the object detection device 200 via the transducer 210 (oscillator 211).

In the graph shown in FIG. 3, a solid line L11 represents an example of an envelope representing the signal level of the signal transmitted and received by the object detection device 200, that is, the time change in a vibration degree of the oscillator 211. From this solid line L11, it can be read that since the oscillator 211 is driven and vibrates just for a time Ta from a timing t0, the transmission of the transmitting wave is completed at a timing t1, and the vibration of the oscillator 211 due to inertia continues while being attenuated for a time Tb until a timing t2 thereafter. Thus, in the graph shown in FIG. 3, the time Tb corresponds to a so-called reverberation time.

In the solid line L11, the vibration degree of the oscillator 211 reaches the peak at which the vibration degree of the oscillator 211 exceeds (or becomes equal to or more than) a predetermined threshold Th1 represented by a long dashed short dashed line L21 at a timing t4 at which just a time Tp passes from the timing t0 at which the transmission of the transmitting wave is started. This threshold Th1 is a value that is set beforehand to identify whether the vibration of the oscillator 211 is caused by receiving the receiving wave serving as the transmitting wave that has returned by being reflected by the object (such as the obstacle O shown in FIG. 2) that is the detection target, or is caused by receiving the receiving wave serving as the transmitting wave that has returned by being reflected by the object (such as the road surface RS shown in FIG. 2) that is not the detection target.

FIG. 3 shows an example in which the threshold Th1 is set as a constant value that does not change over time. However, in the first embodiment, the threshold Th1 may be set as a value that changes over time.

Here, the vibration having a peak exceeding (or equal to or more than) the threshold Th1 can be regarded as being caused by the reception of the receiving wave serving as the transmitting wave that is reflected by the detection target and that is returned. In contrast, the vibration having a peak equal to or less than (or less than) the threshold Th1 can be regarded as being caused by the reception of the receiving wave serving as the transmitting wave that is reflected by an object that is not the detection target and that is returned.

Therefore, from the solid line L11, it can be read that the vibration of the oscillator 211 at the timing t4 was caused by the reception of the receiving wave serving as the transmitting wave that has returned after being reflected back by the detection target.

Note that, in the solid line L11, the vibration of the oscillator 211 is attenuated after the timing t4. Therefore, the timing t4 corresponds to the timing at which the reception of the receiving wave serving as the transmitting wave that has returned after being reflected by the detection target has been completed, in other words, the timing at which the transmitting wave that was last transmitted at the timing t1 returns as the receiving wave.

In the solid line L11, a timing t3 serving as the starting point of the peak at the timing t4 corresponds to the timing at which the reception of the receiving wave serving as the transmitting wave that has returned after being reflected by the detection target starts, in other words, the timing at which the transmitting wave that is transmitted first at the timing t0 returns as the receiving wave. Thus, in the solid line L11, the time ΔT between the timing t3 and the timing t4 is equal to the time Ta serving as the transmission time of the transmitting wave.

Based on the above, in order to acquire the distance to the detection target by the TOF method, it is necessary to acquire a time Tf between the timing t0 at which the transmitting wave starts to be transmitted and the timing t3 at which the receiving wave starts to be received. This time Tf can be acquired by subtracting the time ΔT equal to the time Ta serving as the transmission time of the transmitting wave from the time Tp serving as the difference between the timing t0 and the time t4 at which the signal level of the receiving wave reaches the peak exceeding the threshold Th1.

The timing t0 at which the transmitting wave starts to be transmitted can be easily specified as the timing at which the object detection device 200 starts to operate, and the time Ta serving as the transmission time of the transmitting wave is predetermined by setting or the like. Therefore, in order to acquire the distance to the detection target by the TOF method, it is important to specify the timing t4 at which the signal level of the receiving wave reaches a peak exceeding the threshold Th1. In order to specify the timing t4, it is important to accurately detect the correspondence between the transmitting wave and the receiving wave serving as the transmitting wave that has returned after being reflected by the detection target.

As described above, in the related art, the road surface type cannot be estimated in the CFAR processing when the transmitting wave is transmitted toward the road surface. When the road surface type can be estimated, the accuracy of a setting threshold value and the object detection can be improved, which is significant.

Therefore, in the first embodiment, the road surface type can be estimated by the CFAR processing by configuring the object detection device 200 as described below. A detailed description will be given below.

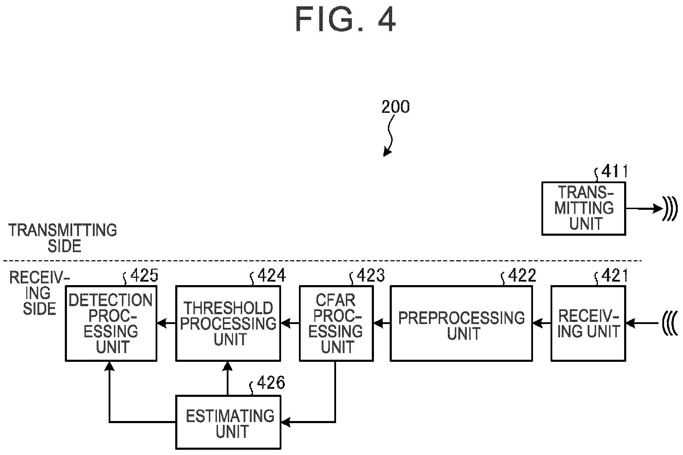

FIG. 4 is an exemplary and schematic block diagram showing the detailed configuration of the object detection device 200 according to the first embodiment.

FIG. 4 shows the configuration on the transmitting side and the configuration on the receiving side in a separated state. However, such an illustrated aspect is for convenience of explanation only. Thus, in the first embodiment, both transmission of the transmitting wave and reception of the receiving wave are realized by the single transducer 210, as described above. However, as described above, the technique of the first embodiment can also be applied to a configuration in which the configuration on the transmitting side and the configuration on the receiving side are separated.

As shown in FIG. 4, the object detection device 200 has a transmitting unit 411 as a configuration on the transmitting side. Further, the object detection device 200 has a receiving unit 421, a preprocessing unit 422, a CFAR processing unit 423, a threshold processing unit 424, a detection processing unit 425, and an estimating unit 426, as a configuration on the receiving side.

In the first embodiment, at least part of the configuration shown in FIG. 4 is realized as the result of cooperation between hardware and software, more specifically, it is realized as the result of the processor 223 of the object detection device 200 reading and executing a computer program from the storage device 222. However, in the first embodiment, at least part of the configuration shown in FIG. 4 may be realized by a dedicated hardware (circuitry). In the first embodiment, each configuration shown in FIG. 4 may operate under the control of the control unit 220 of the object detection device 200 itself, or may operate under the control of the external ECU 100.

First, the configuration on the transmitting side will be described.

The transmitting unit 411 transmits the transmitting wave to the outside including the road surface by causing the above-described oscillator 211 to vibrate at predetermined transmission intervals. The transmission interval is the time interval from when the transmitting wave is transmitted to when the next transmitting wave is transmitted. The transmitting unit 411 is configured to use, for example, a circuit that generates a carrier wave, a circuit that generates a pulse signal corresponding to identification information to be given to the carrier wave, a multiplier that modulates the carrier wave in accordance with the pulse signal, and an amplifier that amplifies the transmission signal output from the multiplier.

The object detection device 200 includes, for example, a plurality of transmitting units 411. For example, since each of the object detection devices 201 to 204 has one transmitting unit 411, four transmitting units 411 can be used. Then, each of the plurality of transmitting units 411 simultaneously transmits the transmitting waves toward the road surface.

Next, the configuration of the receiving side will be described.

The receiving unit 421 receives the reflected wave of the transmitting waves transmitted from the transmitting unit 411 reflected by an object as the receiving wave, until a predetermined measurement time has elapsed after the transmitting wave is transmitted. The measurement time is the waiting time set for receiving the receiving wave serving as the reflected wave of the transmitting wave, after transmission of the transmitting wave.

The preprocessing unit 422 performs preprocessing for converting a received signal corresponding to the receiving wave received by the receiving unit 421 into a processing target signal to be input to the CFAR processing unit 423. The preprocessing includes, for example, an amplification processing for amplifying a received signal corresponding to a receiving wave, a filtering processing for reducing noise contained in the amplified received signal, a correlation processing for acquiring a correlation value indicating the similarity degree of the transmitted signal and the received signal, and an envelope processing for generating a signal based on an envelope of a waveform indicating temporal changes in the correlation value as a processing target signal.

The CFAR processing unit 423 acquires a CFAR signal by performing the CFAR processing on the processing target signal output from the preprocessing unit 422. As described above, the CFAR processing is a process of acquiring the CFAR signal corresponding to a signal from which clutter has been removed from the processing target signal, by using a moving average of values (signal levels) of the processing target signal.

For example, for each of a plurality of transmitting waves, the CFAR processing unit 423 acquires the CFAR signal at the detection timing by the CFAR processing based on a difference between a value of a first processing target signal based on the receiving wave received at a predetermined detection timing, and an average value of a value of a second processing target signal based on the receiving wave received in a predetermined section before and after the detection timing.

Then, the detection processing unit 425 specifies the detection timing at which the CFAR signal value exceeds the threshold, based on the comparison between the CFAR signal value and the threshold set by the threshold processing unit 424. Since the detection timing at which the CFAR signal value exceeds the threshold coincides with the timing at which the signal level of the receiving wave serving as the transmitting wave that has returned by being reflected from the object reaches the peak, when the detection timing at which the value of the CFAR signal exceeds the threshold is specified, it is possible to detect the distance to an object with the TOF method described above.

The estimating unit 426 estimates the road surface type, based on the average signal level of a plurality of the CFAR signals and the variation degree (for example, a standard deviation, a variance, and the like).

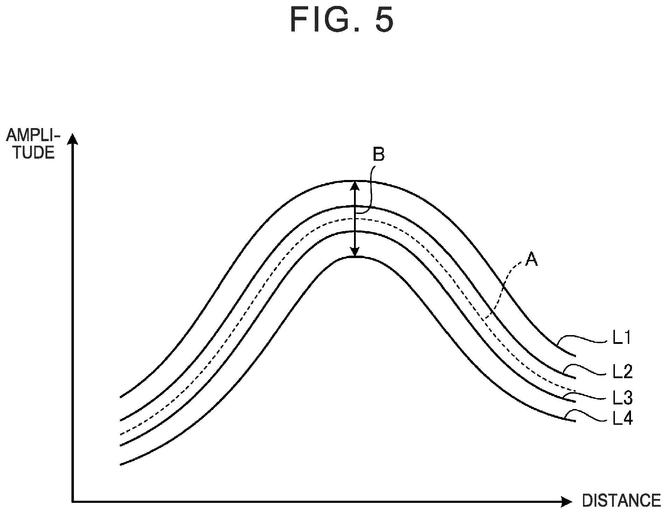

Here, FIG. 5 is an exemplary and schematic diagram showing a relationship between the amplitude of the CFAR signal and the distance in the first embodiment. For example, each of the four transmitting units 411 simultaneously transmits the transmitting waves toward the road surface, and CFAR signals L1 to L4 are acquired by the CFAR processing unit 423 for each transmitting wave.

A variation degree B represents the variation degree of the CFAR signals L1 to L4. An average signal level A represents the average signal level of the CFAR signals L1 to L4. In FIG. 5, the CFAR signals L1 to L4 are represented by lines for the sake of simplification of illustration. However, since the CFAR signals L1 to L4 are actually point groups, the average signal level A is determined by a process using, for example, the least squares method.

The variation degree B and the average signal level A differ depending on the road surface type. The reason for these differences is thought to be, for example, that each of the factors such as surface roughness, constituent materials, and colors are different for each road surface type.

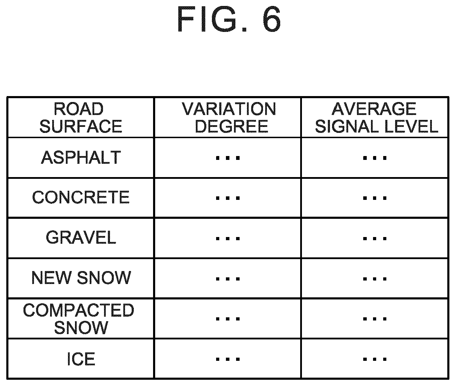

Here, FIG. 6 is an exemplary and schematic diagram showing an example of table information storing information on the variation degree B and the average signal level A for each road surface type in the first embodiment. This table information is stored in the storage device 222, for example.

In this table information, six types of road surfaces are stored as examples of road surface types, which are asphalt, concrete, gravel, fresh snow, compacted snow, and ice. For each of the six types of road surfaces, information on the variation degree B and the average signal level A determined by experiments or the like is stored.

Thus, the estimating unit 426, for example, refers to this table information and estimates the road surface type based on the average signal level and the variation degree of the plurality of CFAR signals.

Returning to FIG. 4, the estimating unit 426 also transmits, for example, information on the estimated road surface type to the brake control unit of the vehicle.

The threshold processing unit 424 sets a threshold for the CFAR signal in accordance with the road surface type estimated by the estimating unit 426. For example, the threshold processing unit 424 sets the threshold to be larger when the variation degree corresponding to the road surface type becomes larger.

For example, since asphalt generally has a rougher surface and a greater variation degree than concrete, the threshold processing unit 424 sets the threshold for asphalt to a value greater than the threshold for concrete.

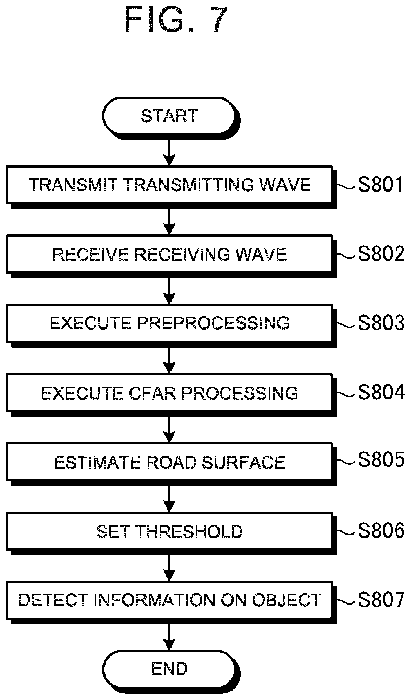

FIG. 7 is an exemplary and schematic flowchart showing a series of processes executed by the object detection system according to the first embodiment.

As shown in FIG. 7, in the first embodiment, first, in S801, the plurality of transmitting units 411 of the object detection device 200 transmits the transmitting waves.

Next, in S802, the receiving unit 421 of the object detection device 200 receives the receiving wave corresponding to the transmitting wave transmitted in S801.

Next, in S803, the preprocessing unit 422 of the object detection device 200 performs the preprocessing for the next processing in S804 for the received signal corresponding to the receiving wave received in S802.

Next, in S804, the CFAR processing unit 423 of the object detection device 200 performs the CFAR processing on the processing target signal output from the preprocessing unit 422 through the preprocessing in S803, and generates the CFAR signal.

Next, in S805, the estimating unit 426 estimates the road surface type based on the average signal level and the variation degree of the plurality of the CFAR signals.

Next, in S806, the threshold processing unit 424 of the object detection device 200 sets a threshold for the CFAR signal generated in S804 in accordance with the road surface type estimated in S805.

Next, in S807, the detection processing unit 425 of the object detection device 200 detects the distance to the object based on the comparison between the value of the CFAR signal and the threshold set in S805. Then the process is ended.

As described above, according to the object detection device 200 of the first embodiment, in the CFAR processing, the road surface type can be estimated based on the average signal level and the variation degree of the plurality of CFAR signals. In other words, the road surface type can be estimated with only the information from the ultrasonic sensor.

In addition, by simultaneously transmitting the transmitting waves from the plurality of transmitting units 411 toward the road surface, the road surface type can be estimated with high accuracy even when the vehicle is traveling.

In addition, the threshold for the CFAR signal can be set with high accuracy in accordance with the estimated road surface type.

Further, it is possible to realize accurate brake control in accordance with the estimated road surface type.

In addition, by setting the threshold to be larger as the variation degree corresponding to the road surface type becomes larger, a specifically appropriate threshold can be set for each road surface type.

### <Second Embodiment>

Next, a second embodiment will be described. Overlapping descriptions of items similar to those of the first embodiment will be omitted as appropriate. In the second embodiment, a case in which the object detection system uses a map to estimate the road surface type ahead and a case in which the object detection system uses a map to estimate the road surface type directly below.

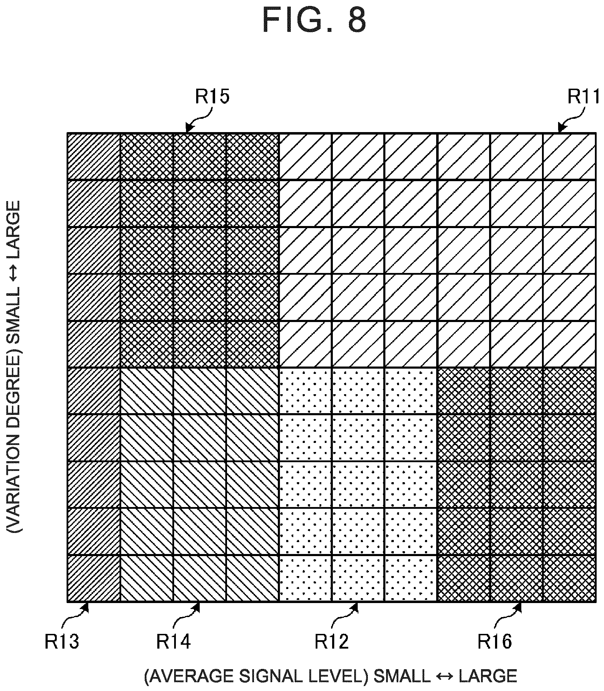

FIG. 8 is a diagram schematically showing an example of a first map used by the object detection system according to the second embodiment to estimate the road surface type ahead. In this first map, the horizontal axis is the average signal level and the vertical axis is the variation degree. The correspondence between regions R11 to R16 and the road surface types is as follows.
Region R11: asphalt
Region R12: gravel
Region R13: fresh snow/concrete/ice (no unevenness)
Region R14: compacted snow
Region R15: other
Region R16: other

Correspondence with the road surface type for each region in the first map is defined in advance based on measured values of the average signal level and the variation degree regarding the reflected wave from the road surface ahead. Then, the estimating unit 426 refers to the first map, applies the average value and the variation degree of each of the second processing target signals based on the reflected wave from the road surface ahead, and estimates the corresponding road surface type. In this way, the road surface type ahead can be estimated with high accuracy.

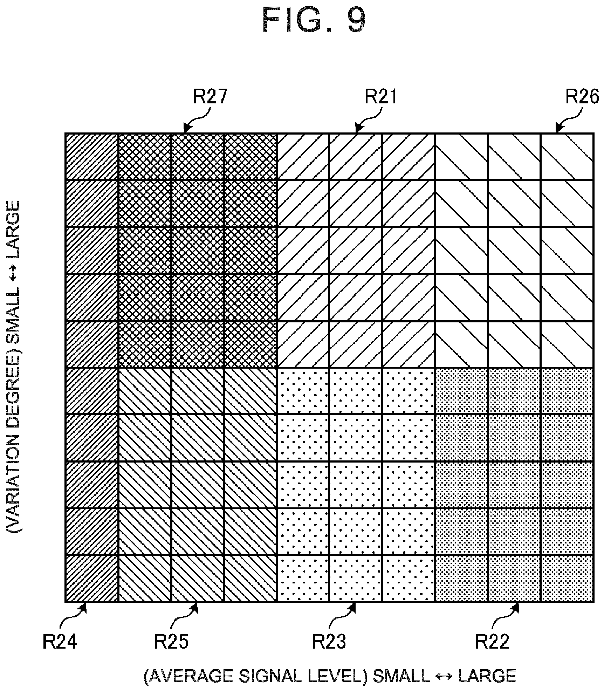

Next, FIG. 9 is a diagram schematically showing an example of a second map used by the object detection system according to the second embodiment to estimate the road surface type directly below. Similar to the first map, the horizontal axis of the second map is the average signal level, and the vertical axis is the variation degree. The correspondence between regions R21 to R27 and the road surface types is as follows.
Region R21: asphalt
Region R22: concrete/ice (no unevenness)
Region R23: gravel
Region R24: fresh snow
Region R25: compacted snow
Region R26: ice (with unevenness)
Region R27: other

Correspondence with the road surface type for each region in the second map is defined in advance based on measured values of the average signal level and the variation degree regarding the reflected wave from the road surface directly below. Then, the estimating unit 426 refers to the second map, applies the average value and the variation degree of each of the second processing target signals based on the reflected wave from the road surface directly below, and estimates the corresponding road surface type. In this way, the road surface type directly below can be estimated with high accuracy.

### <Modification>

In the above-described embodiments, the technique of the present disclosure is applied to a configuration that detects the distance to the object by transmitting and receiving the ultrasonic wave. However, the technique of the present disclosure can also be applied to a configuration that detects a distance to an object by transmitting and receiving a wave other than an ultrasonic wave, such as a sound wave, a millimeter wave, radar, and an electromagnetic wave.

Although the embodiments and modifications of the present disclosure have been described above, the embodiments and modifications described above are merely examples, and are not intended to limit the scope of the invention. The novel embodiments and modifications described above can be implemented in various forms, and various omissions, replacements, and modifications can be made without departing from the scope of the invention. The embodiments and modifications described above are included in the scope and gist of the invention, and are included in the scope of the invention described in the claims and equivalents thereof.

For example, in the above-described embodiment, the transmitting waves are simultaneously transmitted from the plurality of transmitting units 411 toward the road surface. However, the present invention is not limited to this. For example, the road surface type may be estimated based on the plurality of transmitting waves transmitted by a single transmitting unit 411. In particular, when the vehicle is stopped or traveling at a low speed, the road surface type can still be estimated with sufficiently high accuracy.

### Description of Reference Symbols

- 1: vehicle
- 100: ECU
- 200: object detection device
- 210: transducer
- 411: transmitting unit
- 421: receiving unit
- 423: CFAR processing unit
- 424: threshold processing unit
- 425: detection processing unit
- 426: estimating unit

## Claims

1. An object detection device (200) comprising:
a plurality of transmitting units (411), wherein each of the plurality of transmitting units (411) simultaneously transmits a transmitting wave toward a road surface;
a receiving unit (421) that receives a reflected wave of the transmitting waves reflected by an object as a receiving wave;
a Constant False Alarm Rate, CFAR, processing unit (422) that acquires a CFAR signal at a predetermined detection timing by CFAR processing for each of a plurality of the transmitting waves, based on a value of a first processing target signal based on the receiving wave received at the detection timing and an average value of a value of a second processing target signal based on the receiving wave received in a predetermined section before and after the detection timing; the object detection device being **characterized by** further comprising
an estimating unit (426) that estimates a road surface type based on an average signal level (A) and a variation degree (B) of a plurality of the CFAR signals, wherein the variation degree (B) and the average signal level (A) differ depending on the road surface type.

2. An object detection device (200) comprising:
a single transmitting unit (411) that transmits a plurality of transmitting waves toward a road surface; a receiving unit (421) that receives a reflected wave of the transmitting waves reflected by an object as a receiving wave;
a Constant False Alarm Rate, CFAR, processing unit (422) that acquires a CFAR signal at a predetermined detection timing by CFAR processing for each of a plurality of the transmitting waves, based on a value of a first processing target signal based on the receiving wave received at the detection timing and an average value of a value of a second processing target signal based on the receiving wave received in a predetermined section before and after the detection timing; the object detection device being **characterized by** further comprising
an estimating unit (426) that estimates a road surface type based on an average signal level (A) and a variation degree (B) of a plurality of the CFAR signals, wherein the variation degree (B) and the average signal level (A) differ depending on the road surface type.

3. The object detection device (200) according to claim 1 or 2, further comprising a threshold processing unit (424) that sets a threshold regarding the CFAR signal in accordance with the road surface type estimated by the estimating unit (426).

4. The object detection device (200) according to any one of claims 1 to 3,
wherein the object detection device (200) is installed on a vehicle (1), and
wherein the estimating unit (426) transmits information on the estimated road surface type to a brake control unit of the vehicle.

5. The object detection device (200) according to claim 3, wherein the threshold processing unit (424) sets the threshold to be larger as the variation degree corresponding to the road surface type becomes larger.

6. The object detection device (200) according to claim 1 or 2, wherein the estimating unit (426) applies the average value and the variation degree of each of the second processing target signals to a map in which a region is defined in advance by a measured value of the average signal level (A) and the variation degree (B) for each road surface type, and estimates a corresponding road surface type.

## Patentansprüche

1. Eine Objektdetektionsvorrichtung (200) mit:
einer Mehrzahl an Übertragungseinheiten (411), die gleichzeitig eine Übertragungswelle in Richtung einer Straßenoberfläche übertragen;
einer Empfangseinheit (421), die eine reflektierte Welle der von einem Objekt als Empfangswelle reflektierten Übertragungswelle empfängt;
einer Konstantfalschalarmraten-/CFAR-Verarbeitungseinheit (422), die ein CFAR-Signal an einem vorgegebenen Detektionszeitpunkt aufnimmt durch CFAR-Verarbeitung für jedwede der Mehrzahl an Übertragungswellen auf Grundlage eines ersten Verarbeitungszielsignals, welches auf der am Detektionszeitpunkt empfangenen Empfangswelle beruht und eines Durchschnittswerts eines Werts eines zweiten Verarbeitungszielsignals, welches auf dem Empfang der in einem vorgegebenen Abschnitt vor und nach dem Detektionszeitpunkt empfangenen Empfangswelle beruht;
wobei die Objektdetektionsvorrichtung weiterhin **gekennzeichnet ist durch**:
eine Einschätzeinheit (426), welche einen Straßenoberflächentyp auf Grundlage eines Durchschnittsignalniveaus (A) und Variationsgrads (B) einer Mehrzahl an CFAR-Signalen einschätzt, wobei
der Variationsgrad (B) und das Durchschnittssignalniveau (A) sich in Abhängigkeit des Straßenoberflächentypen unterscheiden.

2. Eine Objektdetektionsvorrichtung (200) mit:
einer einzelnen Übertragungseinheit (411), die eine Mehrzahl an Übertragungswellen in Richtung einer Straßenoberfläche überträgt;
einer Empfangseinheit (421), die eine reflektierte Welle der von einem Objekt als Empfangswelle reflektierten Übertragungswelle empfängt;
einer Konstantfalschalarmraten-/CFAR-Verarbeitungseinheit (422), die ein CFAR-Signal an einem vorgegebenen Detektionszeitpunkt aufnimmt durch CFAR-Verarbeitung für jedwede der Mehrzahl an Übertragungswellen auf Grundlage eines ersten Verarbeitungszielsignals, welches auf der am Detektionszeitpunkt empfangenen Empfangswelle beruht und eines Durchschnittswerts eines Werts eines zweiten Verarbeitungszielsignals, welches auf dem Empfang der in einem vorgegebenen Abschnitt vor und nach dem Detektionszeitpunkt empfangenen Empfangswelle beruht;
wobei die Objektdetektionsvorrichtung weiterhin **gekennzeichnet ist durch**:
eine Einschätzeinheit (426), welche einen Straßenoberflächentyp auf Grundlage eines Durchschnittsignalniveaus (A) und Variationsgrads (B) einer Mehrzahl an CFAR-Signalen einschätzt, wobei
der Variationsgrad (B) und das Durchschnittssignalniveau (A) sich in Abhängigkeit des Straßenoberflächentypen unterscheiden.

3. Objektdetektionsvorrichtung (200) nach einem der Ansprüche 1 oder 2, weiterhin mit einer Schwellwertverarbeitungseinheit (424), welche einen Schwellwert bezüglich des CFAR-Signals entsprechend dem durch die Einschätzeinheit (426) eingeschätzten Straßenoberflächentyp setzt.

4. Objektdetektionsvorrichtung (200) nach einem der Ansprüche 1 bis 3, wobei die Objektdetektionsvorrichtung (200) an einem Fahrzeug (1) verbaut ist, und wobei die Einschätzeinheit (426) eine Information zum eingeschätzten Straßenoberflächentyp an eine Bremssteuereinheit des Fahrzeugs überträgt.

5. Objektdetektionsvorrichtung (200) nach Anspruch 3, wobei die Schwellwertverarbeitungseinheit (424) einen Schwellwert setzt, der größer wird mit einem größer werdenden Variationsgrad des entsprechenden Straßenoberflächentyps.

6. Objektdetektionsvorrichtung (200) nach einem der Ansprüche 1 oder 2, wobei die Einschätzeinheit (426) den Durchschnittswert und den Variationsgrad jedes der zweiten Verarbeitungszielsignale auf eine Abbildung anwendet, in welcher ein Bereich im Voraus durch gemessene Werte des Durchschnittssignalniveaus (A) und des Variationsgrads (B) für jeden Straßenoberflächentyp definiert ist, und einen entsprechenden Straßenoberflächentyp einschätzt.

## Revendications

1. Dispositif de détection d'objet (200) comprenant :
une pluralité d'unités de transmission (411), dans lequel chacune de la pluralité d'unités de transmission (411) transmet simultanément une onde de transmission vers une surface de roulement ;
une unité de réception (421) qui reçoit une onde réfléchie des ondes de transmission réfléchies par un objet en tant qu'onde de réception ;
une unité de traitement de Taux de Fausse Alarme Constant, CFAR (*Constant False Alarm Rate*), (422) qui acquiert une signal CFAR lors d'une synchronisation de détection prédéterminée par un traitement CFAR pour chacune d'une pluralité des ondes de transmission, sur la base d'une valeur d'un premier signal cible de traitement basé sur l'onde de réception reçue lors de la synchronisation de détection et d'une valeur moyenne d'une valeur d'un deuxième signal cible de traitement basé sur l'onde de réception reçue dans une section prédéterminée avant et après la synchronisation de détection ; le dispositif de détection d'objet étant **caractérisé en ce qu'**il comprend en outre
une unité d'estimation (426) qui estime un type de surface de roulement sur la base d'un niveau de signal moyen (A) et d'un degré de variation (B) d'un pluralité des signaux CFAR, dans lequel le degré de variation (B) et le niveau de signal moyen (A) diffèrent en fonction du type de surface de roulement.

2. Dispositif de détection d'objet (200) comprenant :
une unique unité de transmission (411) qui transmet une pluralité d'ondes de transmission vers une surface de roulement ; une unité de réception (421) qui reçoit une onde réfléchie des ondes de transmission réfléchies par un objet en tant qu'onde de réception ;
une unité de traitement de Taux de Fausse Alarme Constant, CFAR, (422) qui acquiert une signal CFAR lors d'une synchronisation de détection prédéterminée par un traitement CFAR pour chacune d'une pluralité des ondes de transmission, sur la base d'une valeur d'un premier signal cible de traitement basé sur l'onde de réception reçue lors de la synchronisation de détection et d'une valeur moyenne d'une valeur d'un deuxième signal cible de traitement basé sur l'onde de réception reçue dans une section prédéterminée avant et après la synchronisation de détection ; le dispositif de détection d'objet étant **caractérisé en ce qu'**il comprend en outre
une unité d'estimation (426) qui estime un type de surface de roulement sur la base d'un niveau de signal moyen (A) et d'un degré de variation (B) d'un pluralité des signaux CFAR, dans lequel le degré de variation (B) et le niveau de signal moyen (A) diffèrent en fonction du type de surface de roulement.

3. Dispositif de détection d'objet (200) selon la revendication 1 ou 2, comprenant en outre une unité de traitement de seuil (424) qui établit un seuil concernant le signal CFAR en fonction du type de surface de roulement estimé par l'unité d'estimation (426).

4. Dispositif de détection d'objet (200) selon l'une quelconque des revendications 1 à 3,
dans lequel le dispositif de détection d'objet (200) est installé sur un véhicule (1), et
dans lequel l'unité d'estimation (426) transmet une information sur le type de surface de roulement à une unité de commande de frein du véhicule.

5. Dispositif de détection d'objet (200) selon la revendication 3, dans lequel l'unité de traitement de seuil (424) établit le seuil de sorte qu'il soit plus grand à mesure que le degré de variation correspondant au type de surface de roulement devient plus grand.

6. Dispositif de détection d'objet (200) selon la revendication 1 ou 2, dans lequel l'unité d'estimation (426) applique la valeur moyenne et le degré de variation de chacun des deuxièmes signaux cibles de traitement à une carte dans laquelle une région est définie à l'avance par une valeur mesurée du niveau de signal moyen (A) et du degré de variation (B) pour chaque type de surface de roulement, et estime un type de surface de roulement correspondant.
